# EUROPÄISCHE PATENTSCHRIFT

(11) **EP 0 762 104 B1**
(45) Veröffentlichungstag und Bekanntmachung des Hinweises auf die Patenterteilung: **26.03.2003**
(21) Anmeldenummer: 96112190.2
(22) Anmeldetag: 27.07.1996
(51) Int. Cl.: G01N 1/06

(54) **Kryostat-Mikrotom mit Elektrokontakt-Anfahrtsteuerung für Präparatvorschub**
Cryostat-microtome with electrical-contact specimen-feed controlling
Cryo-microtome avec contrôleur d'avancement de l'échantillon par mesure du contact électrique

(30) Priorität: 01.08.1995 DE 19528180
(43) Veröffentlichungstag der Anmeldung: 12.03.1997
(73) Patentinhaber: Microm International GmbH, 69190 Walldorf (DE)
(72) Erfinder: Niesporek, Christian, 69168 Wiesloch-Baiertal (DE); Heid, Hans, 69245 Bammental (DE); Jakobi, Wolfgang, 12167 Berlin (DE)
(74) Vertreter: Weber, Walter, Dipl.-Ing.(FH)

(56) Entgegenhaltungen:
- EP-A- 0 544 181
- DE-A- 3 500 596
- US-A- 4 516 459
- US-A- 5 181 443
- US-A- 5 282 404

## Beschreibung

Vor dem Anschneiden eines mit einem Mikrotom zu schneidenden Präparates oder vor dem ersten Anschneiden nach einem Ändern des Winkels zwischen dem Präparat und dem Mikrotom-Messer müssen das Präparat und das Messer zunächst relativ zueinander in die Anschnittstellung gebracht werden. Prinzipiell kann dazu der Zustellmechanismus des Mikrotoms genutzt werden, wenn ausgehend von einem relativ großen Abstand zwischen dem Präparat und dem Messer so häufig die Schneidbewegung mit einem anschließenden Vorschub zwischen Präparat und Messer entsprechend der eingestellten Schnittdicke ausgeführt wird, bis der erste Schnitt vom Präparat abgenommen wird. Da dieses Vorgehen jedoch für den Routineeinsatz zu zeitaufwendig ist, versucht die bedienende Person in der Praxis die Anschnittstellung mittels eines Schnellvorschubes zwischen Präparat und Mikrotom-Messer einzustellen. Die Genauigkeit dieser Einstellung und die dafür erforderliche Zeit ist jedoch von der Erfahrung und der Geschicklichkeit der bedienenden Person abhängig.

Um das Auffinden der Anschnittstellung zu automatisieren, ist in der US-A-3,667,330 vorgeschlagen worden, bei einem motorisch angetriebenen Zustellmechanismus Endschalter vorzusehen, bei deren Erreichen der Schnellvorschub zwischen Präparat und Mikrotom-Messer selbsttätig gestoppt wird. Nachteilig ist hier jedoch, daß der nach dem Stoppen der Zustellbewegung verbleibende Abstand zwischen dem Präparat und dem Mikrotom-Messer von der Abmessung des Präparates in Richtung auf das Mikrotom-Messer abhängt; bei Präparaten mit kleinen Abmessungen verbleibt ein relativ großer Abstand, während bei Präparaten mit sehr großen Abmessungen das Messer bereits relativ weit in das Präparat hineinragt und beim nachfolgenden Ausführen eines Schnittes das Präparat beschädigt werden kann.

Zur Lösung dieses Problems ist es aus der EP-A1-0544181 der Anmelderin bekannt, einen Endschalter vorzusehen, der durch Berührung der messerseitigen Päparatoberfläche mit einer Auslösefahne betätigt wird. Bei dieser Anordnung wird die Zustellbewegung gestoppt, bevor die messerseitige Präparatoberfäche die Ebene des Messers erreicht. Der verbleibende Restweg ist zwar für jede Winkelstellung konstant und kann daher als zusätzlicher Verfahrweg einprogrammiert werden. Nach einer Änderung des Messerwinkels ist jedoch ein geänderter Restweg einzuprogrammieren bzw auf einen anderen Restweg umzuschalten. Wird letzteres von Benutzer versäumt, so arbeitet die Präparatannäherung nicht zuverlässig.

In der DE-A1-35 00 596 ist ein Mikrotom beschrieben, bei dem zur Schnittdicken-Regulierung ein kapazitiver Abstands-Sensor vorgesehen ist, der durch das Präparat und das Mikrotom-Messer gebildet wird. Eine derartige Anordnung ist jedoch zum Stoppen des Vorschubes vor dem ersten Anschnitt - also zum Auffinden der Anschnittstellung - oder vor dem ersten Anschnitt nach einer Änderung des Winkels zwischen dem Mikrotom-Messer und dem Präparat nicht geeignet, da sich durch die unterschiedlichen Winkel zwischen der Präparat-Oberfläche und dem Messer, oder durch unterschiedliche Oberflächenformen bei gleichem Abstand zwischen der Präparat-Oberfläche und dem Mikrotom-Messer, unterschiedliche Kapazitäten ergeben.

In der US-A-5,282,404 ist zur Referenzierung der relativen Position von Präparat-Oberfläche und Mikrotom-Messer bereits vorgeschlagen worden, das Messer und das Präparat soweit einander anzunähern, bis eine elektrische Leitfähigkeit zwischen dem Messer und dem Präparat nachweisbar ist. Dieses Mikrotom erfordert jedoch elektrisch leitend beschichtete Präparate. Abgesehen davon, daß hierfür ein zusätzlicher Präparationsschritt erforderlich ist, kann die Beschichtung zu nicht hinnehmbaren Veränderungen oder Schädigungen des Präparates führen.

Es ist das Ziel der Erfindung, ein Kryostat-Mikrotom und ein Verfahren zum Betrieb eines Kryostat-Mikrotoms anzugeben, das die Anschnittstellung automatisch und zuverlässig unabhängig von der Größe und der Form des Präparates bei den für die Kryostat-Mikrotomie in üblicher Weise präparierten biologischen Präparate auffindet.

Dieses Ziel wird durch ein Kryostat-Mikrotom mit den Merkmalen des Anspruches 1 und Verfahren nach den Ansprüchen 15 und 16 gelöst. Vorteilhafte Ausgestaltungen der Erfindung ergeben sich aus den Merkmalen der abhängigen Ansprüche.

Beim erfindungsgemäßen Mikrotom wird zwischen dem Mikrotom-Messer und dem Präparat eine elektrische Spannung angelegt und es ist eine elektronische Schaltung vorgesehen, die den bei einem mechanischen Kontakt zwischen dem Mikrotom-Messer und dem Präparat aufgrund der Eigenleitfähigkeit des gefrorenen Präparates auftretenden geänderten Spannungsabfall am Präparat bzw. Strom durch das Präparat detektiert. Bei der Detektion eines vorgegebenen Wertes für den Spannungsabfall wird die Vorschubbewegung von Mikrotom-Messer und Präparat auf einander zu von einer Steuerschaltung selbsttätig gestoppt.

Die vorliegende Erfindung nutzt dementsprechend die Tatsache aus, dass sogenannte native gefrorene biologische Präparate, d.h. biologische Präparate, die mit Ausnahme der Gefrierung ansonsten unbehandelt sind und demzufolge ihren natürlichen Wassergehalt aufweisen, eine Eigenleitfähigkeit aufweisen, die von dem durch die Messerkante auf das Präparat ausgeübten Druck abhängt, und dass eine durch die Änderung der Eigenleitfähigkeit verursachte Änderung des Spannungsabfalls am Präparat hinreichend genau detektierbar ist. Die in der Ultramikrotomie zu schneidenden Präparate sind in der Regel entwässert und weisen demzufolge eine zu geringe Leitfähigkeit auf. Der Wassergehalt nativer Proben beträgt dagegen üblicherweise mindestens 80 Volumenprozent. Das erfindungsgemäße Mikrotom ist deshalb zum Schneiden hinsichtlich ihrer elektrischen Leitfähigkeit unbehandelter Präparate, insbesondere unbeschichteter Präparate geeignet. Allerdings können die Präparate insbesondere in lateraler Richtung, also parallel zur Schnittebene, von einem sogenannten Compund umgeben sein. Ein solcher Compound ist eine wasserhaltige gallertartige Masse, die zur mechanischen Stabilisierung der lateralen Ränder des Präparates dient.

Die elektronische Schaltung ist hinsichtlich ihrer Empfindlichkeit so ausgelegt, daß bei Anlegen von Niederspannungen am Präparat die am Präparat abfallende Spannung bzw. der Strom durch das Präparat detektierbar ist, auch wenn der Widerstand des Präparates größer als 1 Megaohm ist oder über einen Bereich von 5 bis 200 Megaohm schwankt.

Als besonders zweckmäßig hat es sich erwiesen, eine Steuerschaltung vorzusehen, die die Vorschubbewegung in Abhängigkeit von der jeweiligen Temperatur des Präparates bei unterschiedlichen Werten des Spannungsabfalls am Präparat bzw. Strom durch das Präparat stoppt. Dadurch läßt sich die Temperaturabhängigkeit der Leitfähigkeitsänderung des Präparates über einen derart weiten Bereich kompensieren, daß die Anschnittstellung bei allen üblichen Schnittemperaturen im Bereich von - 10° C bis - 50° C mit großer Genauigkeit eingestellt wird. Für die Ermittlung der Präparattemperatur ist im Kryostaten in der Nähe des Präparates ein Temperatursensor vorgesehen.

Vorzugsweise sollte die zwischen dem Mikrotom-Messer und dem Präparat angelegte elektrische Spannung zwischen drei und 60 Volt betragen, da bei niedrigeren Spannungen aufgrund der starken Temperaturabhängigkeit der Leitfähigkeit des Präparates der Spannungsabfall am Präparat nicht bei allen üblichen Temperaturen mit hinreichender Genauigkeit detektierbar ist und da bei höheren Spannungen als 60 Volt, also wenn die Grenze der Schutz-Kleinspannung überschritten wird, sicherheitstechnische Probleme auftreten und außerdem durch die elektrische Spannung bzw. den elektrischen Strom durch das Präparat auftretende Veränderungen des Präparates zu erwarten sind.

Vorzugsweise stimmt die angelegte elektrische Spannung mit der Versorgungsspannung eines Meßvorverstärkers der elektronischen Schaltung überein. Es ist dann keine zusätzliche Spannungswandlung erforderlich. Der Meßvorverstärker kann als Impedanzwandler, also mit auf den invertierenden Eingang zurückgekoppeltem Verstärkerausgang, beschaltet sein. Der nicht-invertierende Eingang des Meßvorverstärkers sollte leitend mit dem Präparat oder mit dem Messer des Mikrotoms und hochohmig über einen Widerstand mit der Spannungsversorgung des Meßvorverstärkers verbunden sein. Der hochohmige Widerstand und das Präparat bilden dann eine Spannungsteilerschaltung und die über das Präparat abfallende Spannung entspricht der Differenz aus der Versorgungsspannung und der über den hochohmigen Widerstand abfallenden Spannung. Der Wert des hochohmigen Widerstandes sollte mindestens 10 Megaohm, vorzugsweise mindestens 22 Megaohm aufweisen, damit auch bei Präparattemperaturen zwischen - 30° C und - 50° C eine hinreichende Änderung des Spannungsabfalls am Präparat detektierbar ist.

Damit eine elektrische Spannung zwischen dem Mikrotom-Messer und dem Präparat angelegt werden kann, müssen beide Teile gegeneinander isoliert sein. Vorteilhafterweise ist dazu der Objekthalter, der zur Aufnahme eines Präparattisches dient, an einem elektrisch-isolierenden Isolierkörper am Mikrotom aufgenommen. Dadurch befindet sich die elektrische Isolation an einer Stelle, an der eine Verschmutzung mit Schnittresten, die u.U. einen elektrischen Kurzschluß zwischen dem Präparat und dem Mikrotom-Messer verursachen kann, weitgehend ausgeschlossen ist. Der Isolierkörper sollte dabei aus einer Keramik oder einem glasfaserverstärkten Kunststoff bestehen, um zu verhindern, daß die auftretenden Schnittkräfte zu einer nennenswerten Verformung des Isolierkörpers führen.

Der Meßvorverstärker sollte möglichst nahe am Präparat angeordnet sein, damit die von den Mikrotom-Motoren verursachten elektromagnetischen Streustrahlungen die Messung des Spannungsabfalles nicht verfälschen. Dazu ist es besonders vorteilhaft, den Isolierkörper hohlzylindrisch auszubilden und den Meßvorverstärker einschließlich des hochohmigen Widerstandes und elektronischen Tiefpaßfiltern im Inneren des hohlzylindrischen Isolierkörpers anzuordnen.

Nachfolgend werden Einzelheiten der Erfindung anhand des in den Figuren dargestellten Ausführungsbeispiels näher erläutert. Im einzelnen zeigen:
- Figur 1: einen Schnitt durch ein erfindungsgemäßes Kryostat-Mikrotom in dem das Mikrotom-Messer und den Präparatträger enthaltenden Bereich;
- Figur 2: einen Schaltplan des im Präparatträger integrierten Meßverstärkers;
- Figur 3: ein Diagramm des Spannungsabfalls zum Stoppen der Vorschubbewegung als Funktion der Kryostat-Temperatur;
- Figur 4: ein Ablaufdiagramm der Vorschubsteuerschaltung beim Anschnitt eines Präparates; und
- Figur 5: ein Ablaufdiagramm einer Schaltung zur automatischen Bestimmung und zum automatischen Setzen eines Schneidefensters.

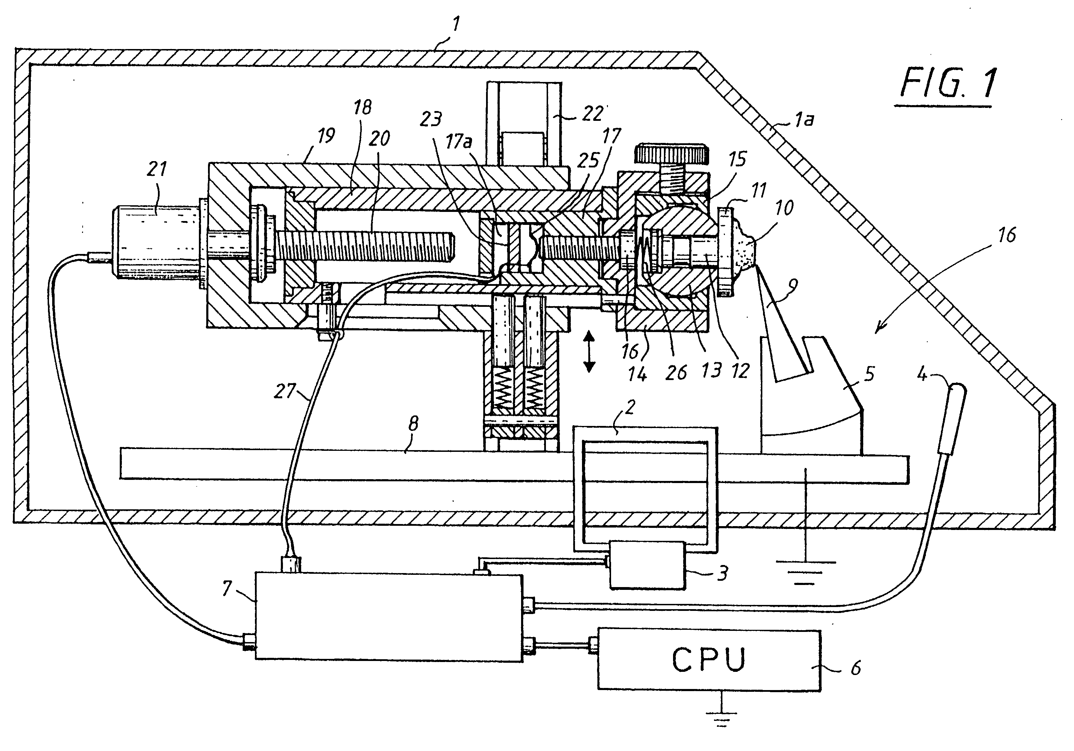

Das Kryostat-Mikrotom in der Figur 1 weist ein an sich bekanntes, thermisch-isoliertes Kryostat-Gehäuse auf, dessen isolierende Außenwand mit (1) bezeichnet ist. An der Frontseite des Kryostaten ist eine Öffnungsklappe (1a) aus einem durchsichtigen Material vorgesehen, so daß das Mikrotom im Innenraum (1b) des Kryostaten zum Wechseln von Präparat oder Messer, sowie zur Reinigung zugänglich ist. Durch einen im Inneren (1b) des Kryostaten vorgesehenen Wärmetauscher (2), der an einen Kompressor (3) außerhalb des Kryostaten angeschlossen ist, kann der Innenraum (1b) des Kryostaten von der Umgebungstemperatur bis hinunter auf - 50° C abgekühlt werden.

Die übliche Arbeitstemperatur solcher Kryostat-Mikrotome liegt dabei, je nach Konsistenz des Präparates, im Bereich von - 10° bis - 50° C. Die Temperatur im Innenraum (1b) des Kryostaten wird mittels eines Temperatursensors (4) kontinuierlich gemessen und die Kühlleistung des Kompressors (3) derart geregelt, daß die mit dem Temperatursensor (4) gemessene Temperatur der vom Benutzer an einer nicht dargestellten Konsole eingestellten Soll-Temperatur entspricht. Für diese Regelung der Kryostat-Temperatur sind der Temperatursensor (4), der Kompressor (3) und ein Steuerungsprozessor (6) über eine Verbindungseinheit (7) miteinander verbunden. Die Verbindungseinheit (7) stellt dabei die Schnittstelle zwischen den einzelnen Geräteteilen dar.

Desweiteren ist im Innenraum (1b) des Kryostaten das eigentliche Mikrotom angeordnet. Es umfaßt eine feste metallische Grundplatte (8), die auf Erdpotential liegt und an der im Frontbereich des Kryostaten ein metallischer Messerhalter (5) mit einem darin aufgenommenen, ebenfalls metallischen Messer (9) angeordnet ist.

Das zu schneidende Präparat (10) ist auf einem Objekttisch (11) aufgenommen. Für einen schnellen und einfachen Präparatwechsel weist der Objekttisch (11) einen Zylinderbolzen (12) auf, der in einer Gelenkkugel (13) festklemmbar ist. Zum Wechseln des Präparates (10) kann der Objekttisch (11) nach Lösen einer nicht dargestellten Klemmschraube aus der Gelenkkugel (13) horizontal nach vorn herausgezogen und gegen einen anderen Objekttisch mit einem anderen Präparat ausgetauscht werden.

Die Gelenkkugel (13) dient zur Einstellung der Relativorientierung zwischen Präparat (10) und Mikrotom-Messer (9). Die Gelenkkugel (13) ist dazu in einem Zylinderkopf (14) drehbar aufgenommen, und mittels Klemmbacken (15) ist die eingestellte Position der Gelenkkugel (13) festklemmbar.

Der Zylinderkopf (14) ist durch eine elektrisch-leitende Schraube (16) mit einem zylindrischen Isolierkörper (17) verschraubt. Der Isolierkörper (17) besteht aus einem hochfesten, elektrisch-isolierenden Material, beispielsweise einer Keramik oder einem glasfaserverstärkten Kunststoff.

Der Isolierzylinder (17) ist wiederum zum größten Teil im Inneren eines metallischen Hohlzylinders (18) und dieser Hohlzylinder (18) horizontal beweglich in einer metallischen Zylinderführung (19) aufgenommen. Für die Zustellbewegung zwischen dem Präparat (10) und dem Mikrotom-Messer (9), also um vor dem Anschnitt des Präparates (10) dieses in die Nähe des Mikrotom-Messers (9) zu bringen und um nachfolgend nach jedem Schnitt das Präparat um die voreingestellte Schnittdicke nachzuführen, wird der metallische Hohlzylinder (18) relativ zur Zylinderführung (19) horizontal verschoben. Für diese Zustellbewegung ist ein Schrittmotor (21) mit einer Gewindestange (20) an der Zylinderführung (19) und am Hohlzylinder (18) ein an die Gewindestange (20) angepaßtes Innengewinde vorgesehen. Der Hohlzylinder (18), dessen Innengewinde, die Zylinderführung (19) und die Gewindestange (20) des Schrittmotors (21) sind dazu koaxial zueinander angeordnet.

Für die Ausführung der Schneidbewegung ist die Zylinderführung (19) senkrecht zu ihrer Zylinderachse beweglich an einer Führungsbahn (22) aufgenommen, die selbst wieder fest mit der Grundplatte (8) des Mikrotoms verbunden ist. Zum Ausführen der mikrotomischen Schnitte wird die Zylinderführung (19) in vertikaler Richtung, wie durch den Doppelpfeil angedeutet, bewegt.

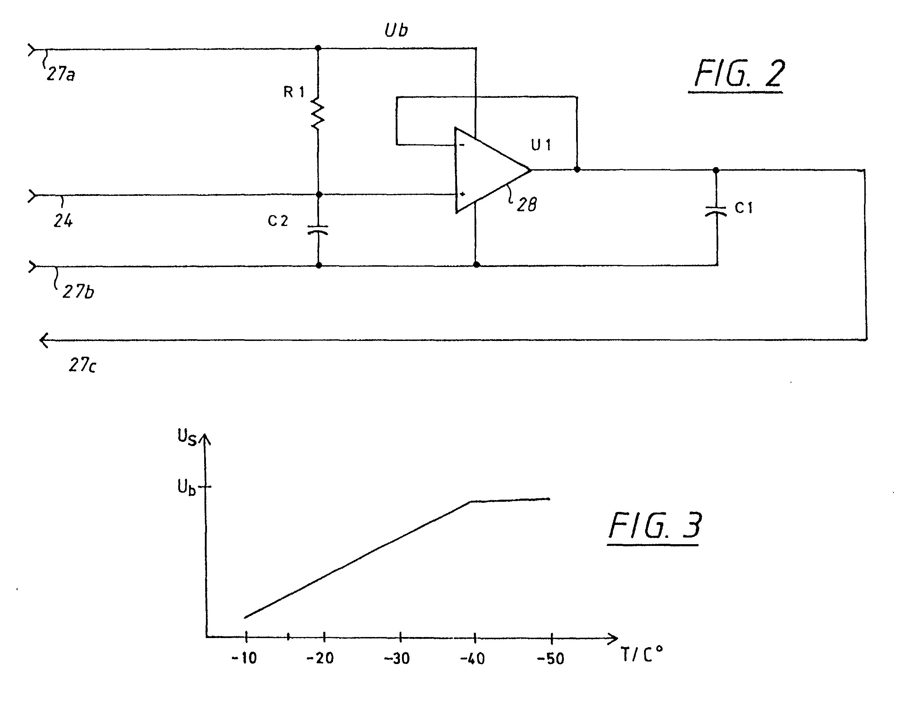

Der Isolierkörper (17) weist in einem sich in das Innere des Hohlzylinders (18) erstreckenden Bereich eine Aussparung (17a) auf und ist dementsprechend teilweise hohlzylindrisch ausgebildet. In dieser Aussparung (17a) ist eine Platine (23) mit der in der Figur 2 dargestellten und weiter unten noch näher beschriebenen Vorverstärkerschaltung angeordnet. Der Eingang der Vorverstärkerschaltung ist an eine ebenfalls in der Ausnehmung (17a) des Isolierkörpers (17) angeordnete, federnde Metallplatte (25) angeschlossen, auf die die Schraube (16) zur Befestigung des Zylinderkopfes (14) drückt. Zwischen dem Kopf der Schraube (16) und dem Bolzen (12) des Objekttisches (11) ist desweiteren eine metallische Druckfeder (26) vorgesehen. Auf diese Weise ist der metallische Objekttisch (11) elektrisch leitend mit dem Eingang der Vorverstärkerplatine (23) verbunden, wobei durch die metallischen Federn (25, 26) gleichzeitig eine einfache und schnelle Auswechselbarkeit von Objekttisch (11) und Zylinderkopf (14) gewährleistet ist. Gleichzeitig ist durch die Anordnung der Vorverstärkerplatine (23) in der Ausnehmung (17a) des Isolierkörpers (17) eine möglichst kurze Leitungsverbindung zwischen dem Präparat (10) und der Vorverstärkerplatine (23) gewährleistet, wodurch das Einsprechen elektrischer Streusignale, beispielsweise vom Schrittmotor (21) oder vom nichtdargestellten Antriebsmotor für die Vertikalbewegung der Zylinderführung (19), insbesondere in den Eingang des Vorverstärkers vermieden wird.

Der Ausgang der Vorverstärkerplatine (23) und die Spannungsversorgung des Vorverstärkers erfolgt durch ein dreiadriges Kabel (27), das durch Öffnungen im Hohlzylinder (18) und in der Zylinderführung (19) herausgeführt und an die Verbindungseinheit (7) angeschlossen ist. Die Ausgangssignale des Vorverstärkers werden an den Steuerungsprozessor (6) weitergegeben. Auf der Platine des Steuerungsprozessors (6) sind die erforderlichen Analog/Digital-Wandler für die gemessenen Signale sowie das Niederspannungsnetzteil für die Vorverstärkerplatine (23) vorgesehen.

Die auf der Vorverstärkerplatine (23) angeordnete Schaltung ist in der Figur 2 im Detail dargestellt. Sie besteht im wesentlichen aus einem Meßverstärker (28), dessen Ausgang auf den invertierenden Eingang zurückgekoppelt ist und demzufolge einen Impedanzwandler darstellt. Die Versorgungsleitungen des Operationsverstärkers (28) sind mit (27a) und (27b) bezeichnet, wobei die Leitung (27a) auf der positiven Versorgungsspannung von 5 Volt und die Leitung (27b) auf Erdpotential liegt. Zwischen dem Ausgang (27c) des Operationsverstärkers (28) und der Masseleitung (27b) ist ein erster Kondensator (C1) mit einer Kapazität von 10 µF geschaltet, der zusammen mit dem Ausgangswiderstand des Meßverstärkers (28) ein Tiefpaßfilter mit einer Grenzfrequenz von ca. 100 Hz bildet. Durch diesen Tiefpaß werden Störsignale, die zwischen dem Operationsverstärker (28) und der Verbindungseinheit (7) in die Ausgangsleitung (27c) einsprechen, gedämpft. Zwischen der Masseleitung (27b) und dem nicht-invertierenden Eingang des Meßverstärkers (28) ist ein zweiter Kondensator (C2) mit einer Kapazität von 0,33 nF geschaltet, und zwischen der positiven Versorgungsleitung (27a) des Meßverstärkers (28) und dem nicht-invertierenden Eingang ist ein Widerstand (R1) von 22 Megaohm geschaltet. Der zweite Kondensator (C2) bildet mit dem Widerstand (R1) ein Tiefpaßfilter mit einer Grenzfrequenz von 25 Hz. Durch dieses Tiefpaßfilter werden Störungen, die zwischen dem Präparat (10) und dem nicht-invertierenden Eingang des Meßverstärkers (28) einsprechen, gedämpft.

Der nicht-invertierende Eingang des Meßverstärkers (28) stellt den Eingang der Vorverstärkerschaltung dar und ist leitend an die Metallplatte (24) angeschlossen und damit mit dem Präparat (10) verbunden. Solange das Präparat (10) und das Messer (9) von einander beabstandet sind, und demzufolge keine elektrisch-leitende Verbindung zwischen dem Präparat (10) und dem auf Erdpotential liegenden Mikrotom-Messer (9) existiert, liegt das Präparat (10) über den Widerstand (R1) auf der Versorgungsspannung U_{b} des Meßvorverstärkers (28) von + 5 V. Zwischen dem Präparat (10) und dem Mikrotom-Messer (9) liegt demzufolge eine Spannung von 5 V an. Im Falle eines mechanischen Kontaktes zwischen dem Mikrotom-Messer (9) und dem Präparat (10) wird durch den vom Mikrotom-Messer (9) auf das gefrorene Präparat (10) ausgeübten Druck die Eigenleitfähigkeit des Präparates (10) erhöht. Die Ursache dafür ist vermutlich, daß durch den von der spitzen Messerklinge ausgeübten Druck Eiskristalle innerhalb des Präparates (10) schmelzen und dadurch die Leitfähigkeit erhöhen. Der elektrische Widerstand des Präparates ist dabei sowohl von der Probendicke als auch von der Kryostat-Temperatur abhängig. Er beträgt bei - 10° C Kryostat-Temperatur je nach Probendicke ca. 7-10 Megaohm und bei - 50° C ca. 200 Megaohm. Dieser Widerstand des Präparates und der Widerstand (R1) der Vorverstärkerschaltung bilden eine Spannungsteilerschaltung. Die am nicht-invertierenden Eingang des Meßverstärkers (28) anliegende Spannung ist demzufolge um so niedriger, je höher die Eigenleitfähigkeit des Präparates (10) ist. Dieses Abfallen der Spannung am nicht-invertierenden Eingang des Meßverstärkers (28) erzeugt eine nahezu identische, stromverstärkte Spannungsänderung am Verstärkerausgang (27c), die beim Erreichen einer vordefinierten Schwellspannung (Uₛ) vom Steuerungsprozessor (6) detektiert wird. Darauf folgend wird vom Steuerungsprozessor (6) der Schrittmotor (21) und damit der Präparatvorschub gestoppt.

Da die Eigenleitfähigkeit des Präparates stark temperaturabhängig ist, wird die Vorschubbewegung in Abhängigkeit von der mit dem Temperatursensor (4) gemessenen Temperatur bei unterschiedlichen Schwellspannungen (Uₛ) am Ausgang des Vorverstärkers gestoppt. Diese Temperaturabhängigkeit der Schwellspannung (Uₛ) ist in der Figur 3 dargestellt. Sie hat bei einem Widerstand (R1) von 22 Megaohm zwischen - 10° C und - 40° C einen linearen Verlauf und hat bei - 10° C einen Wert von 12,5 % und bei - 40° C einen Wert von 94 % der bei fehlendem Kontakt zwischen Präparat und Mikrotom-Messer auftretenden Ausgangsspannung des Verstärkers, die im wesentlichen der Versorgungsspannung (U_{b}) entspricht. Bei Temperaturen unter - 40° C bleibt die Schwellspannung (Uₛ) konstant bei 94 % dieser Ausgangsspannung. Bei Temperaturen zwischen - 10 °C und - 40 °C wird die Abhängigkeit der Schwellspannung von der Temperatur vom Steuerungsprozessor (6) nach der Formel Uₛ = a * (T - Tₒ) + b anhand des aktuellen Wertes der Temperatur berechnet. Dabei ist T der Betrag der Temperatur und Tₒ die maximal zulässige Temperatur von - 10 °C und der Faktor a beträgt 0,12 V/°C. Der Koeffizient b entspricht 1/8 der bei fehlendem Kontakt zwischen Präparat und Mikrotom-Messer auftretenden Ausgangsspannung des Verstärkers. Der jeweilige Wert der Schwellspannung (Uₛ) wird vom Prozessor je nach Kryostat-Temperatur zur Detektion des Kontaktes zwischen Präparat und Mikrotom-Messer angewendet, wobei bei Temperaturen zwischen - 40 °C und - 50 °C der zu - 40 °C zugehörige Wert für die Schwellspannung verwendet wird.

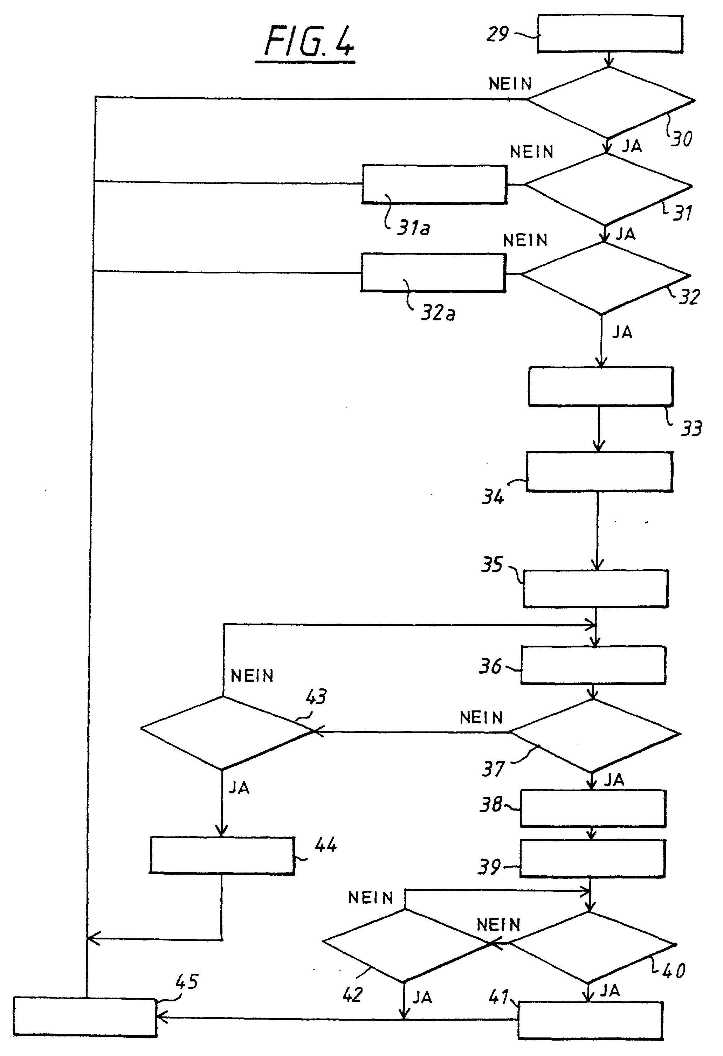

Die beim erfindungsgemäßen Mikrotom automatisch ablaufenden Funktionsschritte sind in der Figur 4 als Blockdiagramm dargestellt. Betätigt der Operateur nach Einsetzen eines neuen oder anderen Präparates eine Taste (29) für die automatische Präparatannäherung auf der nicht dargestellten Eingabekonsole, so wird vom Steuerungsprozessor (6) in einem Schritt (30) zunächst abgefragt, ob der Objekttisch sich auf der Höhe des Mikrotom-Messers befindet. Ist dieses nicht der Fall, so wird bei einem Mikrotom mit manuellem Antrieb der Schneidbewegung die Routine durch Erreichen des Schrittes (45) verlassen. Bei einem Mikrotom mit motorischem Antrieb der Schneidbewegung wird der Objekttisch automatisch auf die Höhe des Mikrotom-Messers eingestellt.

Nachdem der Objekttisch die Höhe des Mikrotom-Messers erreicht hat wird in einem Schritt (31) überprüft, ob die mit dem Temperatursensor (4) gemessene Kryostat-Temperatur im zulässigen Bereich zwischen - 10 °C und - 50 °C liegt. Ist dieses nicht der Fall, wird in einem Schritt (31a) eine Fehlermeldung erzeugt und auf einem nicht dargestellten Display angezeigt. Liegt die Temperatur im zulässigen Bereich, wird in einem nachfolgenden Schritt (32) überprüft, ob die Ausgangsspannung des Vorverstärkers mindestens 96 % der Versorgungsspannung (U_{b}) beträgt. Ist diese Bedingung nicht erfüllt, wird in einem Schritt (32a) eine Fehlermeldung generiert, die dem Benutzer einen bereits bestehenden Kontakt zwischen Präparat und Mikrotom-Messer anzeigt. Beträgt die Ausgangsspannung des Vorverstärkers mehr als 96 % der Versorgungsspannung, so wird in einem Schritt (33) die aktuelle Ausgangsspannung gemessen und in einem Schritt (34) die Schwellspannung (Uₛ) nach der obigen Gleichung anhand der aktuellen Ausgangsspannung und dem aktuellen Temperaturwert berechnet. Darauf folgend wird in einem Schritt (35) der Schrittmotor (21) für den Probenvorschub gestartet und das Präparat auf das Mikrotom-Messer hinzu bewegt (Horizontalbewegung). Während der Präparatbewegung wird ständig in einem Schritt (36) die Ausgangsspannung des Vorverstärkers (28) gemessen und in einem Schritt (37) überprüft, ob die Ausgangsspannung bereits kleiner als die berechnete Schwellspannung (Uₛ) ist. Ist die Schwellspannung kleiner als die Ausgangsspannung, so wird in einer Abfrage (43) überprüft, ob der Benutzer durch Betätigung einer entsprechenden Taste den Befehl zu einem Abbruch der automatischen Präparatannäherung eingegeben hat. Ist dieses der Fall wird der Schrittmotor (21) in einem Schritt (44) gestoppt und im Funktionsschritt (45) die Routine verlassen; andernfalls wird die Bewegung des Schrittmotors (21) fortgesetzt, bis die Ausgangsspannung des Vorverstärkers (28) kleiner als die Schwellspannung (Uₛ) ist und durch Erreichen des Funktionsschrittes (38) der Schrittmotor gestoppt wird. Darauf folgend wird in einem Funktionsschritt (39) der Schrittmotor (21) umgekehrt angesteuert und das Präparat um 200 µm vom Mikrotom-Messer entfernt. In einer nachfolgenden Abfrageschleife (40) wird geprüft, ob der Objekttisch sich in der obersten Stellung befindet. Ist dieses nicht der Fall, wird im Schritt (42) geprüft, ob der Benutzer einen Abbruchbefehl gegeben hat. Ist auch dieses nicht der Fall, werden die Abfragen (40, 42) erneut solange gestellt, bis eine der Abfragen mit ja beantwortet wird. Für die Detektion des obersten Stellung des Objekttisches sind in bekannter Weise nicht dargestellte Lichtschranken vorgesehen.

Befindet sich der Objekttisch bei der Abfrage (40) in der obersten Stellung, so wird in einem abschließenden Schritt (41) die Bewegung des Schrittmotors (21) erneut umgekehrt und das Präparat wieder um betragsmäßig die selbe Strecke wie im Schritt (39) - also um 200 µm - auf das Mikrotom-Messer hinzu bewegt und nachfolgend durch Erreichen des Funktionsschrittes (45) die Routine verlassen. Danach kann das Anschneiden des Präparates begonnen und das Präparat in üblicher Weise geschnitten werden.

Durch das von einander Entfernen von Präparat und Messer im Schritt (39) wird sicher gestellt, daß beim Zurückfahren des Objekttisches in dessen oberste Stellung Präparat und Messer von einander beabstandet sind und keine Beschädigungen des Präparates auftreten. Das Zurückfahren des Objekttisches in dessen oberste Stellung kann bei einem Mikrotom mit motorischem Antrieb der Schneidbewegung wiederum selbsttätig erfolgen.

In einem Mikrotom mit motorischem Antrieb der Schneidebewegung kann die oben beschriebene Erfindung zusätzlich auch eingesetzt werden, um ein automatisches Schneidefenster zu detektieren und zu setzen. Mikrotome mit einem motorischen Antrieb der Schneidebewegung arbeiten üblicherweise mit einer kontrollierten Schneidegeschwindigkeit. Die Schneidegeschwindigkeit wird üblicherweise über einen Rückkoppelkreis gesteuert, in dem durch ein Potentiometer die Schneidegeschwindigkeit einstellbar ist und die aktuelle Geschwindigkeit der Schneidebewegung detektiert wird. Die Geschwindigkeitsdetektion erfolgt üblicherweise über einen Tachogenerator an dem Antriebsmotor oder mit Hilfe eines inkrementellen Drehgebers am Motor oder an einer anderen Stelle des Antriebes. Die Schneidegeschwindigkeit selbst wird üblicherweise vom Bedienenden so ausgewählt, daß möglichst gute Schnitte von der zu schneidenden Probe resultieren. Diese optimale Geschwindigkeit hängt von der erforderlichen Schnittdicke und von der Festigkeit des zu schneidenden Gewebes ab.

Nach jedem Schnitt durch eine vertikale Bewegung des Präparates folgt eine Umkehrbewegung des Präparates in die oberste Stellung des Präparathalters. Um die erforderliche Zeit für diese Umkehrbewegung möglichst kurz zu halten, ist es üblich, diese Umkehr- oder Rückzugsbewegung mit einer höheren Geschwindigkeit auszuführen als die eigentliche Schneidebewegung. Fortschrittliche Mikrotome haben ein sogenanntes einstellbares Schneidefenster. Dieses Schneidefenster wird durch Eingabe an der Bedienungskonsole voreingestellt und wirkt mit einem Positionssensor im Antrieb der Schneidebewegung derart zusammen, daß nur innerhalb des Schneidefensters, d.h. einer voreingestellten Weglänge, die Schneidebewegung mit der voreingestellten Schneidegeschwindigkeit erfolgt, während die Schneidebewegung außerhalb des Schneidefensters mit einer höheren, üblicherweise der maximalen Geschwindigkeit des Schneideantriebes, erfolgt. Durch diese Maßnahmen wird die für einen kompletten Schneidezyklus erforderliche Zeit minimiert, wobei gleichzeitig das eigentliche Schneiden des Präparates mit der voreingestellten Geschwindigkeit erfolgt. Üblicherweise wird das Schneidefenster etwas größer als die vertikalen Abmessungen des zu schneidenden Präparates eingestellt, damit eine Abbremsung auf die voreingestellte Schneidegeschwindigkeit vor dem eigentlichen Anschneiden erfolgen kann.

Die oben beschriebene Erfindung kann in einem weiteren vorteilhaften Ausführungsbeispiel auch eingesetzt werden, um bei einem Kryostat-Mikrotom mit einem motorischen Antrieb der Schneidebewegung ein entsprechendes Schneidefenster automatisch zu bestimmen und unabhängig von den Vertikalabmessungen des zu schneidenden Präparates zu setzen. Dazu ist es lediglich erforderlich, den motorischen Antrieb für die Schneidebewegung mit einem Positionssensor, beispielsweise mit einem inkrementellen Meßsystem im Motor selbst oder an einer anderen Stelle innerhalb des Antriebes auszustatten und ein weiteres Steuerprogramm zur Steuerung der Geschwindigkeit der Schneidebewegung unter Ausnutzung der vom Vorverstärker gelieferten Signale zu ergänzen, um ein optimales Schneidefenster zu bestimmen. Bei diesem Ausführungsbeispiel wird der anhand der Figur 4 beschriebene Ablauf dahingehend abgeändert, daß die anhand der Figur 4 beschriebene Prozedur zur automatischen Präparatannäherung mit dem Schritt (39), also mit dem voneinander Entfernen von Präparat und Messer um eine voreingestellte Wegstrecke, verlassen wird. Das motorische Schneiden kann durch Betätigung eines entsprechenden Schalters auf der Bedienungskonsole des Mikrotoms ausgelöst werden. Nachfolgend erfolgt eine Bewegung des Präparates in die oberste Präparatstellung mit der maximalen Geschwindigkeit, bis die oberste Präparatstellung mittels des Positionssensors für die Schneidebewegung detektiert wird. Nach Erreichen dieser obersten Präparatstellung wird das Messer um eine Strecke auf das Präparat hinzu vorgeschoben, die der Summe aus der im Schritt (39) zurückgelegten Wegstrecke zuzüglich der gewünschten und voreingestellten Schnittdicke entspricht. Nachfolgend erfolgt die Bewegung des Präpartes nach unten mit der voreingestellten Schneidegeschwindigkeit. Während dieser Abwärtsbewegung des Präparates wird ein Signal vom Vorverstärker zum Prozessor geliefert, wenn die Messerkante das Präparat berührt. Dieses Signal wird beibehalten, bis der Schnitt abgenommen ist. Wenn das Signal erscheint, wird die aktuelle Position des Präparates mit Hilfe des Positionssensors für die Schneidebewegung gelesen und im Speicher des Prozessors abgespeichert. Wenn das Signal wiederrum seinen Wert ändert, weil das Präparat vollständig geschnitten ist und das Messer keinen mechanischen Kontakt mit dem Präparat mehr hat, wird erneut die aktuelle Stellung des Präparates mit Hilfe des Positionssensors gelesen und im Speicher abgespeichert. Die Differenz beider abgespeicherten Positionswerte stellt ein Maß für die Vertikalabmessungen des Präparates dar. Nachfolgend wird das Schneidefenster anhand dieser beiden Positionswerte derart bestimmt, daß das Schneidefenster etwas größer als die Vertikalabmessungen des Präparates sind, so daß das System von der höheren Geschwindigkeit für die Rückzugsbewegung auf die gewünschte Schneidegeschwindigkeit abgebremst werden kann. Dazu werden den gemessenen Positionswerten kleine Korrekturwerte hinzu addiert. Die so gemessenen Positionswerte unter Berücksichtigung der Korrekturwerte definieren das Schneidefenster für den nächsten Schneidezyklus. Beim nachfolgenden Schneidezyklus erfolgt die Bewegung des Präparates mit der Maximalgeschwindigkeit des Antriebes bis zum Erreichen des Schneidefensters und die Schneidebewegung wird nach Erreichen des Schneidefensters und vor dem Anschneiden des Präparates auf die voreingestellte Schneidegeschwindigkeit abgebremst und nach verlassen des Schneidefensters wieder auf die Maximalgeschwindigkeit beschleunigt. Die oben beschriebenen Messungen werden bei dem nachfolgenden Schneidevorgang stets wiederholt durchgeführt und aus den jeweiligen Positionswerten ein aktuelles Schneidefenster für den nachfolgenden Schneidezyklus bestimmt. Dadurch ergibt sich auch für unregelmäßig geformte oder konisch zulaufende Präparate stets ein optimiertes Schneidefenster.

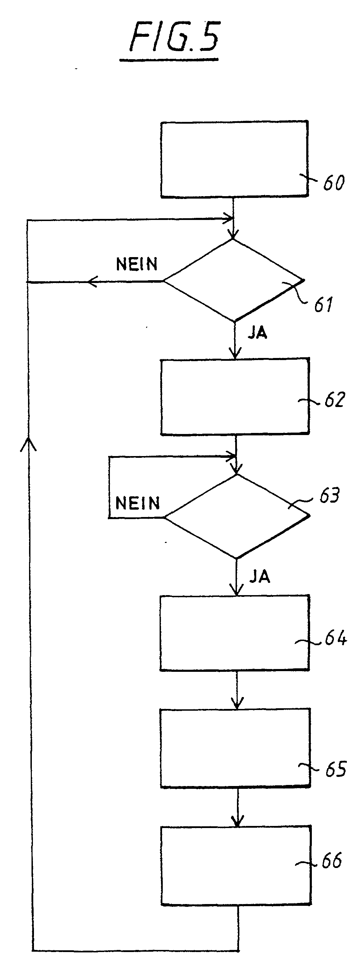

Der Ablauf des entsprechenden Steuerungsprogramms wird nachfolgend anhand der Figur 5 erläutert. Wenn der Bediener die Taste zum Starten der motorischen Schneidebewegung des Mikrotoms auslöst, erfolgt der Rückzug des Präparatträgers in die oberste Position und nachfolgend die Annäherung des Messers an die Präparatposition um die zuvor zurückbewegte Wegstrecke von 200µm zuzüglich der voreingestellten Schnittdicke. Nachfolgend erfolgt die Abwärtsbewegung des Präparatträgers mit der voreingestellten Schneidegeschwindigkeit in einem Funktionsschritt (60). In einem nachfolgenden Funktionsschritt (61) fragt der Steuerungsprozessor (6) ab, ob eine Änderung des Ausgangssignals des Vorverstärkers eingetreten ist. Ist dieses nicht der Fall, wird der Schneidevorgang mit der voreingestellten Schneidegeschwindigkeit fortgesetzt. Erreicht das Präparat das Messer liefert der Vorverstärker ein geändertes Ausgangssignal. In diesem Augenblick wird die Abfrage im Funktionsschritt (61) mit ja beantwortet. In einem darauffolgenden Funktionsschritt (62) wird dann die aktuelle Position des Präparates bzw. des Präparatträgers mit Hilfe des nicht dargestellten Positionssensors im Antriebsmotor für die Schneidebewegung ausgelesen und in einem Speicher des Prozessors (6) abgespeichert. Die Abwärtsbewegung des Präparates wird währenddessen mit der voreingestellten Schneidegeschwindigkeit fortgesetzt. In einem Funktionsschritt (63) überprüft der Prozessor, ob das Ausgangssignal des Vorverstärkers wieder auf den ursprünglichen Wert zurückgegangen ist, weil mittlerweile das Präparat vollständig das Messer passiert hat. Solange dieses nicht der Fall ist, wird der Schneideprozess fortgesetzt. Wenn die Abfrage im Funktionsschritt (63) positiv ist, das Ausgangssignal des Verstärkers also wieder den ursprünglichen Wert angenommen hat, wird die aktuelle Position des Präparates mit Hilfe des Positionssensors erneut ausgelesen und im Speicher des Prozessors in einem Schritt (64) abgespeichert. In einem nachfolgenden Funktionsschritt (65) wird aus den abgespeicherten Positionswerten das Schneidefenster für den nachfolgenden Schneidezyklus bestimmt. Dazu wird von dem oberen Positionsmeßwert ein kleiner Betrag abgezogen und von dem unteren Positionsmeßwert ein kleiner Betrag hinzu addiert, so daß das Schneidefenster etwas größer ist als die Vertikalabmessungen des Präparates. Im nachfolgenden Schritt (66) steuert der Prozessor (6) die Schneidebewegung über die Geschwindigkeit des Antriebsmotors derart daß die Rückzugsbewegung des Präparates, d.h. die aufwärtsgerichtete Bewegung bis zur obersten Präparatposition und den ersten Teil der abwärtsgerichteten Bewegung des nachfolgenden Schneidezyklus bis zum Erreichen des Schneidefensters mit der höheren Rückzugsgeschwindigkeit erfolgt und bei Bewegung des Präparates durch das beim vorherigen Schneidezyklus ermittelte Schneidefenster mit der voreingestellten Schneidegeschwindigkeit erfolgt. Während des Schneidezyklus erfolgt die Bestimmung des neuen Schneidefensters für den nachfolgenden Schneidezyklus in der oben beschriebenen Weise. Dieses Verfahren wird solange fortgesetzt bis der motorische Schnittantrieb gestoppt wird. Daraus resultiert stets ein kontinuierlich optimiertes automatisches Schneidefenster, das automatisch ermittelt und automatisch gesetzt wird.

Beim beschrieben Ausführungsbeispiel wird die Schwellspannung (Uₛ) immer wieder erneut anhand der bei fehlendem Kontakt zwischen Präparat und Mikrotom-Messer vorliegenden Ausgangsspannung des Vorverstärkers berechnet. Alternativ könnte auch eine Datentabelle der zur jeweiligen Temperatur zugehörigen Schwellspannungen in einem Speicher abgelegt sein. Statt einer Berechnung der Schwellspannungen wäre dann lediglich der zur aktuellen Temperatur zugehörige Wert aus der Tabelle auszuwählen. Dieses hätte jedoch gegenüber dem beschriebenen Ausführungsbeispiel den Nachteil, daß entweder die Vorverstärker derart zu selektieren wären, daß stets in engen Grenzen die selbe Ausgangsspannung bei fehlendem Kontakt zwischen Messer und Präparat vorliegt, oder daß für die Steuerschaltung eines jeden individuellen Gerätes eine individuelle Datentabelle zu ermitteln wäre. Im Gegensatz dazu können die Ausgangsspannungen der Vorverstärker beim beschrieben Ausführungsbeispiel innerhalb der Serie um 4 - 5 % variieren und es kann dennoch stets derselbe, oben angegebene Wert für den Funktionskoeffizienten a angewendet werden.

Beim in den Figuren dargestellten Ausführungsbeispiel ist die Vorverstärkerplatine präparatseitig angeordnet. Selbstverständlich ist es auch möglich, den Messerhalter gegenüber der Basisplatte des Mikrotoms zu isolieren und die Vorverstärkerplatine in dieser Isolierung in der Nähe des Messerhalters anzuordnen, wobei dann der Messerhalter an den Verstärkereingang anzuschließen ist. Allerdings ist bei dieser Alternative die Isolierung einer stärkeren Verschmutzung durch Schnittreste ausgesetzt, wodurch ein Kurzschluß zwischen dem Messer und dem Präparat und dadurch ein vorzeitiges Stoppen der Zustellbewegung resultieren kann.

## Patentansprüche

1. Kryostat-Mikrotom zum Schneiden gefrorener Präparate (10) mit einer Steuerschaltung (6, 37, 38), die eine Vorschubbewegung von Mikrotom-Messer (9) und Präparat (10) auf einander zu bei mechanischem Kontakt zwischen Mikrotom-Messer (9) und Präparat (10) selbsttätig stoppt, wobei zwischen dem Messer (9) und dem Präparat (10) eine elektrische Spannung angelegt ist und zum Stoppen der Vorschubbewegung eine elektronische Schaltung (6, 23, 28) vorgesehen ist, die den aufgrund der Eigenleitfähigkeit des Präparates (10) beim mechanischen Kontakt zwischen dem Mikrotom-Messer (9) und dem Präparat (10) auftretenden geänderten Spannungsabfall am Präparat bzw. Strom durch das Präparat (10) detektiert, **dadurch gekennzeichnet dass** die elektronische Schaltung (6, 23, 28) derart ausgelegt ist, dass ein geänderter Spannungsabfall am Präparat und/oder Strom durch das Präparat detektierbar ist, wenn der elektrische Widerstand des Präparates (10) größer als 1 Megaohm, vorzugsweise im Bereich 5 bis 200 Megaohm, und die angelegte Spannung kleiner oder gleich 60V beträgt.

2. Kryostat-Mikrotom nach Anspruch 1, wobei die elektrische Spannung zwischen dem Objekttisch (11) und dem Mikrotom-Messer (9) angelegt ist.

3. Kryostat-Mikrotom nach Anspruch 1 oder 2, wobei die elektrische Spannung zwischen 3 V und 60 V beträgt.

4. Kryostat-Mikrotom nach einem der Ansprüche 1-3, wobei im Kryostaten ein Temperatursensor (4) vorgesehen ist, die Steuerschaltung (6, 37, 38) die Vorschubbewegung beim Erreichen eines vorgegebenen Wertes (Uₛ) für den Spannungsabfall am Präparat bzw. Strom durch das Präparat stoppt und wobei der vorgegebene Wert (Uₛ) in Abhängigkeit von der Kryostat-Temperatur unterschiedlich ist.

5. Kryostat-Mikrotom nach einem der Ansprüche 1-4, wobei die elektronische Schaltung einen Messvorverstärker (28) enthält und die angelegte elektrische Spannung der Versorgungsspannung (U_{b}) des Messvorverstärkers (28) entspricht.

6. Kryostat-Mikrotom nach Anspruch 5, wobei der Messvorverstärker als Impedanzwandler beschaltet ist.

7. Kryostat-Mikrotom nach Anspruch 5 oder 6, wobei der eine Eingang des Messvorverstärkers (28) elektrisch leitend mit dem Präparat (10) oder dem Mikrotom-Messer (9) und hochohmig über einen elektrischen Widerstand (R1) an die Spannungsversorgung des Messvorverstärkers (28) angeschlossen ist.

8. Kryostat-Mikrotom nach Anspruch 7, wobei der hochohmige Widerstand einen Widerstand von mindestens 10 Megaohm, vorzugsweise von 22 Megaohm aufweist.

9. Kryostat-Mikrotom nach einem der Ansprüche 1-8, wobei ein Objekthalter (13, 15, 16) zur Aufnahme des Objekttisches (11) an einem elektrisch isolierenden Isolierkörper (17) aufgenommen ist.

10. Kryostat-Mikrotom nach Anspruch 9, wobei der Isolierkörper (17) eine Ausnehmung (17a) aufweist und der Messvorverstärker (28) in der Ausnehmung (17a) des Isolierkörpers (17) angeordnet ist.

11. Kryostat-Mikrotom nach Anspruch 9 oder 10, wobei der Isolierkörper (17) aus einer Keramik oder aus einem glasfaserverstärkten Kunststoff besteht.

12. Kryostat-Mikrotom nach einem der Ansprüche 1-11, wobei eine Steuerschaltung (6, 39, 41) vorgesehen ist, durch die selbsttätig nach dem Stoppen der Vorschubbewegung die Bewegung zwischen dem Präparat zwischen dem Präparat (10) und dem Mikrotom-Messer (9) umgekehrt wird und Präparat (10) und Mikrotom-Messer (9) um eine voreingestellte Wegstrecke von einander entfernt werden und nach Erreichen der obersten Stellung des Präparates (10) Mikrotom-Messer (9) und Präparat (10) um die voreingestellte Wegstrecke wieder auf einander zu bewegt werden.

13. Kryostat-Mikrotom nach einem der Ansprüche 4-12, wobei die Steuerschaltung (6) ein Programm (29-45) enthält und die vorgegebene Spannung (Uₛ) beim Ablauf des Programmes (29-45) anhand von Funktionskoeffizienten berechnet wird.

14. Kryostat-Mikrotom nach einem der Ansprüche 1-13, wobei für den Antrieb der Schneidebewegung ein motorischer Antrieb mit einem Positionsmeßsystem vorgesehen ist und wobei eine Steuerschaltung vorgesehen ist, die entsprechend den Positionen entlang der Schneidebewegung, in denen ein mechanischer Kontakt zwischen Präparat und Messer detektiert wird, die Geschwindigkeit der Schneidebewegung regelt.

15. Verfahren zum Betrieb eines Kryostat-Mikrotoms, bei dem eine Vorschubbewegung von Mikrotom-Messer (9) und gefrorenem Präparat (10) auf einander zu bei mechanischem Kontakt zwischen Mikrotom-Messer (9) und Präparat (10) selbsttätig gestoppt wird, wobei zwischen dem Präparat (10) und dem Mikrotom-Messer (9) eine elektrische Spannung angelegt wird und zum Stoppen der Vorschubbewegung ein aufgrund der Eigenleitfähigkeit des gefrorenen Präparates (10) auftretender Strom durch das Präparat bzw. Spannungsabfall am Präparat detektiert wird, **dadurch gekennzeichnet, dass** die elektrische Spannung kleiner oder gleich 60 V beträgt und der elektrische Widerstand des Präparates (10) größer als 1 Megaohm ist.

16. Verfahren zum Auffinden der Anschnittstellung in der Mikrotomie biologischer Präparate mit folgenden Schnitten:
- Aufnahme eines in üblicher Weise zur Kryostatmikrotomie präparierten Präparates auf einem Objekttisch eines Mikrotoms;
- Kühlen auf Temperaturen zwischen -10°C und -50°C;
- Anlegen einer elektrischen Spannung zwischen dem Objekttisch und der Messerkante des Mikrotoms;
- Annähern von Objekttisch mit dem Präparat und Messer;
- Detektion des Kontaktes von Präparat und Messerkante durch Erfassen der Stromleitung durch das Präparat bzw. eines geänderten Spannungsabfalls am Präparat, und
- Stoppen der Annäherung von Objekttisch und Präparat infolge der Detektion des Kontaktes,
- **dadurch gekennzeichnet, dass** der elektrische Widerstand des Präparates größer als 1 Megaohm ist.

## Claims

1. Cryostatic microtome for cutting frozen preparations (10) with a control circuit (6, 37, 38), which automatically stops a thrust movement of the microtome knife (9) and preparation (10) towards one another in the event of mechanical contact between the microtome knife (9) and preparation (10), wherein an electrical voltage is applied between the knife (9) and the preparation (10) and an electronic circuit (6, 23, 28) is provided to stop the thrust movement, detecting the alteration in the drop of voltage on the preparation or current through the preparation (10) as a result of the intrinsic conductivity of the preparation (10) in mechanical contact between the microtome knife (9) and the preparation (10), **characterised in that** the electronic circuit (6, 23, 28) is designed in such a way that a change in the drop of voltage on the preparation and/or current through the preparation is detectable when the electrical resistance of the preparation (10) is greater than 1 Megaohm, preferably in the range from 5 to 200 Megaohm, and the voltage applied is smaller than or equal to 60V.

2. Cryostatic microtome according to Claim 1, **characterised in that** the electrical voltage is applied between the specimen stage (11) and the microtome knife (9).

3. Cryostatic microtome according to Claim 1 or 2, **characterised in that** the electrical voltage is between 3 V and 60 V.

4. Cryostatic microtome according to one of the claims 1-3, **characterised in that** a temperature sensor (4) is provided in the cryostat, the control circuit (6, 37, 38) stops the thrust movement when a required value (Us) for the drop of voltage on the preparation or current through the preparation has been reached and **in that** the required value (Us) differs as a function of the cryostat temperature.

5. Cryostatic microtome according to one of the claims 1-4, **characterised in that** the electronic circuit contains a measuring preamplifier(28) and that the electrical voltage applied matches the supply voltage (Ub) of the measuring preamplifier (28).

6. Cryostatic microtome according to Claim 5, **characterised in that** the measuring preamplifier is wired as an impedance transformer.

7. Cryostatic microtome according to Claim 5 or 6, **characterised in that** the one inlet of the measuring preamplifier (28) is connected electrically conductively to the preparation (10) or the microtome knife (9) and to the voltage supply of the measuring preamplifier(28) with high-ohmic resistance via an electrical resistor (R1).

8. Cryostatic microtome according to Claim 7, **characterised in that** the high-ohmic resistor manifests a resistance of at least 10 Megaohm, preferably of 22 Megaohm.

9. Cryostatic microtome according to one of the claims 1-8, **characterised in that** an object holder (13, 15, 16) to support the specimen stage (11) is supported on an electrically insulating insulation body (17).

10. Cryostatic microtome according to Claim 9, **characterised in that** the insulating body (17) manifests a recess (17a) and that the measuring preamplifier (28) is arranged in the recess (17a) of the insulating body (17).

11. Cryostatic microtome according to Claim 9 or 10, **characterised in that** the insulating body (17) comprises a ceramic or a glass fibre reinforced plastic.

12. Cryostatic microtome according to one of the claims 1-11, **characterised in that** a control circuit (6, 39, 41) is provided, through which the movement between the preparation (10) and the microtome knife (9) is reversed automatically after the stopping of the thrust movement and preparation (10) and microtome knife (9) are removed from one another by a pre-set distance and, after the uppermost position of the preparation (10) has been reached, the microtome knife (9) and preparation (10) are moved back towards one another for the pre-set distance.

13. Cryostatic microtome according to one of the claims 4-12, **characterised in that** the control circuit (6) contains a programme (29-45) and that the required voltage (Us) is calculated in the running of the programme (29-45) on the basis of function coefficients.

14. Cryostatic microtome according to one of the claims 1-13, **characterised in that** a motive drive with a position measurement system is provided for the drive of the cutting movement and **in that** a control circuit is provided, which regulates the velocity of the cutting movement in accordance with the positions along the cutting movement in which a mechanical contact is detected between preparation and knife.

15. Method for the operation of a cryostatic microtome, in which a thrust movement of microtome knife (9) and frozen preparation (10) towards one another is automatically stopped in the event of mechanical contact between microtome knife (9) and preparation (10), with an electrical voltage being applied between the preparation (10) and the microtome knife (9) and that, in order to stop the thrust movement, a current through the preparation or a drop of voltage on the preparation is detected on the basis of the intrinsic conductivity of the frozen preparation (10), **characterised in that** the electrical voltage is smaller than or equal to 60 V and the electrical resistance of the preparation (10) is larger than 1 Megaohm.

16. Method to find the cutting position in the microtomy of biological preparations with the following steps:
- positioning of a preparation prepared in the customary way for cryostatic microtomy on a specimen stage of a microtome;
- cooling to temperatures between -10°C and -50°C;
- application of an electrical voltage between the specimen stage and the knife edge of the microtome;
- moving the specimen stage and the preparation and knife closer;
- detection of the contact of preparation and knife edge by detection of the conduction of current through the preparation or a change in the drop of voltage on the preparation, and
- stopping the movement of specimen stage and preparation as a result of the detection of the contact,
- **characterised in that** the electrical resistance of the preparation is larger than 1 Megaohm.

## Revendications

1. Microtome à congélation pour couper des préparations gelées (10) avec un circuit de commande (6, 37, 38) qui arrête automatiquement un mouvement d'avance de la lame de microtomé (9) et de la préparation (10) en s'approchant l'une de l'autre au moment du contact mécanique entre la lame de microtome (9) et la préparation (10), une tension électrique étant appliquée entre la lame (9) et la préparation (10) et un circuit électronique (6, 23, 28) étant prévu pour arrêter le mouvement d'avance, circuit qui détecte la chute de tension modifiée respectivement le courant traversant la préparation (10)survenant lors du contact mécanique entre la lame de microtome (9) et la préparation (10) en raison de la conductibilité intrinsèque de la préparation (10), **caractérisé en ce que** le circuit électronique (6, 23, 28) est réalisé de manière à pouvoir détecter une chute de tension modifiée sur la préparation et/ou un courant traversant la préparation quand la résistance électrique de la préparation (10) est supérieure à MegaOhm, de préférence si elle est comprise entre 5 et 200 MegaOhms et que la tension appliquée est inférieure ou égale à 60 v.

2. Microtome à congélation selon la revendication 1, dans lequel la tension électrique est appliquée entre la table porte-objet (11) et la lame de microtome (9).

3. Microtome à congélation selon la revendication 1 ou 2, dans lequel la tension électrique est comprise entre 3 V et 60 V.

4. Microtome à congélation selon l'une des revendications 1 à 3, dans lequel une sonde de température (4) est prévue dans le cryostat, dans lequel le circuit de commande (6, 7, 38) arrête le mouvement d'avance lorsqu'une valeur prédéterminée (Uₛ) est atteinte par la chute de tension sur la préparation ou par le courant traversant la préparation, et dans lequel la valeur prédéterminée (Uₛ) est différente en fonction de la température du cryostat.

5. Microtome à congélation selon l'une des revendications 1 à 3, dans lequel le circuit électronique comprend un préamplificateur de lame (28) et la tension électrique appliquée correspond à la tension d'alimentation (U_{b}) du préamplificateur de mesure (28).

6. Microtome à congélation selon la revendication 5, dans lequel le préamplificateur de mesure intervient en tant que convertisseur d'impédance.

7. Microtome à congélation selon la revendication 5 ou 6, dans lequel une entrée du préamplificateur de mesure (28) est reliée de manière électrique avec la préparation (10) ou la lame microtome (9) et par haute impédance à l'alimentation de tension du préamplificateur (28) par une résistance électrique (R1).

8. Microtome à congélation selon la revendication 7, dans lequel la résistance à haute impédance présente une résistance d'au moins 10 MegaOhm de préférence de 22 MegaOhm.

9. Microtome à congélation selon l'une des revendications 1 à 3, dans lequel un porte-objets (13, 15, 16) est logé sur un corps isolant (17) isolé électriquement pour recevoir une table porte-objet (11).

10. Microtome à congélation selon la revendication 9, dans lequel le corps isolant (17) présente un évidement (17a) et le préamplificateur de mesure (28) est disposé dans l'évidement (17a) du corps isolant (17).

11. Microtome à congélation selon la revendication 9 ou 10, dans lequel le corps isolant (17) se compose de céramique ou d'une matière synthétique renforcée par fibres de verre.

12. Microtome à congélation selon l'une des revendications 1 à 11, dans lequel il est prévu un circuit de commande (6, 39, 41) qui inverse automatiquement après l'arrêt du mouvement d'avance le mouvement entre la préparation (10) et la lame (9) de microtome et qui éloigne la préparation (10) et la lame de microtome (9) l'une de l'autre de l'équivalent d'un trajet prédéterminé et qui rapproche à nouveau la lame de microtome (9) et la préparation (10) de l'équivalent du trajet prédéterminé après avoir atteint la position la plus haute de la préparation (10).

13. Microtome à congélation selon l'une des revendications 4 à 12, dans lequel le circuit de commande comprend un programme (29-45) et la tension prédéterminée (Us) est calculée à l'aide de coefficients de fonction lors du déroulement du programme (29-45).

14. Microtome à congélation selon l'une des revendications 1 à 13, dans lequel il est prévu pour l'entraînement du mouvement de coupe un entraînement motorisé avec un système de mesure de position et dans lequel un circuit de commande est prévu qui règle la vitesse du mouvement de coupe en fonction des positions le long du déplacement de trajet de coupe dans lequel est détecté un contact mécanique entre la préparation et la lame.

15. Procédé pour le fonctionnement d'un microtome à congélation dans lequel un mouvement d'avance de la lame de microtome (9) et de la préparation congelée (10) se rapprochant l'une de l'autre est arrêté automatiquement au moment du contact mécanique entre la lame de microtome (9) et la préparation (10), dans lequel une tension électrique est appliquée entre la préparation (10) et la lame de microtome (9) et pour l'arrêt du mouvement d'avance un courant traversant la préparation respectivement une chute de tension sur la préparation survenant en raison de la conductibilité intrinsèque de la préparation congelée est détecté(e), **caractérisé en ce que** la tension électrique est inférieure ou égale à 60 V et **en ce que** la résistance électrique de la préparation (10) est supérieure à 1 MegaOhm.

16. Procédé pour la détermination de la position de coupe dans la microtomie e préparation biologique avec les étapes suivantes :
- Réception d'une préparation préparée de manière habituelle pour la microtomie à congélation sur une table porte-objet d'un microtome;
- Refroidissement à des températures comprises entre -10° et -50°C;
- Application d'une tension électrique entre la table porte-objet et le tranchant de lame du microtome;
- Rapprochement de la table porte-objet avec la préparation et la lame;
- Détection du contact entre la préparation et le tranchant de lame par saisie de la ligne de courant par la préparation respectivement de la chute de tension modifiée sur la préparation et
- Arrêt du rapprochement de la table porte-objet et de la préparation à la suite de la détection du contact,
**caractérisé en ce que** la résistance électrique de la préparation est supérieure à 1 MegaOhm.
